# EUROPÄISCHE PATENTSCHRIFT

(11) **EP 1 440 641 B1**
(45) Veröffentlichungstag und Bekanntmachung des Hinweises auf die Patenterteilung: **14.12.2005**
(21) Anmeldenummer: 04001038.1
(22) Anmeldetag: 20.01.2004
(51) Int. Cl.: A47J 31/42, A47J 42/50

(54) **Kaffeeautomat**
Automated coffee machine
Machine à café automatique

(30) Priorität: 21.01.2003 DE 20300850 U
(43) Veröffentlichungstag der Anmeldung: 28.07.2004
(73) Patentinhaber: WIK Far East Ltd., North Point, Hong Kong (CN)
(72) Erfinder: Steckhan, Markus, 45481 Mülheim (DE)
(74) Vertreter: Schröter & Haverkamp

(56) Entgegenhaltungen:
- EP-A- 0 804 894
- DE-A- 10 201 768
- DE-U- 29 801 248
- US-A- 5 509 349

## Beschreibung

Die Erfindung betrifft einen Kaffeeautomaten mit einem mit seinem Ausgabeschacht an den Eingang eines Mahlwerkes angeschlossenen Kaffeebohnenbehälter.

Kaffeeautomaten bzw. Kaffeevollautomaten verfügen über einen Kaffeebohnenbehälter zum Bevorraten von Kaffeebohnen. Bei solchen Automaten wird bei jeder Anforderung frisch gemahlenes Kaffeepulver für die Kaffeezubereitung verwendet. Ein dem Automaten zugehöriges Mahlwerk ist für die Bereitstellung der jeweils benötigten Kaffeemehlmenge verantwortlich. Der Kaffeebohnenbehälter umfasst ein Behältnis mit einem Ausgabeschacht, der auf den Eingang des Mahlwerkes aufgesetzt ist. Der Ausgabeschacht des Behältnisses trägt in aller Regel oberseitig einen Leitkonus, damit die Kaffeebohnen dem Mahlwerk seitlich zugeführt werden. Das Behältnis ist unterseitig offen.

Befestigt ist der Kaffeebohnenbehälter mit dem Gehäuse des Kaffeeautomaten mittels eines Kupplungsringes, der an einem entsprechend konzipierten Gegenstück, beispielsweise nach Art eines Bajonettes festlegbar ist.

Es sind Kaffeeautomaten entwickelt worden, die zum Verhindern eines Brühprozesses mit einer zu geringen Kaffeemehlmenge den Elektromotor zum Antreiben des Mahlwerkes hinsichtlich seiner Drehzahl und/oder hinsichtlich seines Stromverbrauches überwachen. Steigt die Drehzahl des Mahlwerkes an, lässt dieses darauf schließen, dass sich im Mahlwerk keine Kaffeebohnen mehr befinden oder keine Kaffeebohnen zugeführt werden. Entsprechendes ist bei einer Stromüberwachung feststellbar: Sinkt der Stromverbrauch, ist die vom Mahlwerk ausgeübte Arbeit zu gering, was wiederum auf einen Mangel zugeführter Kaffeebohnen schließen lässt. Die bei diesem vorbekannten Stand der Technik eingesetzten Überwachungsmethoden dienen primär dem Zweck, einen Brühprozess zum Bereitstellen eines Kaffeegetränkes nur dann zu starten, wenn eine ausreichende Kaffeemehlmenge durch Mahlen der vorgegebenen Kaffeebohnenmenge bereitgestellt worden ist. Anderenfalls würde das gewünschte Kaffeegetränk nicht den gewohnten Anforderungen entsprechen. Die Kaffeemehldosierung erfolgt in aller Regel über eine Bestimmung der Dauer des Bestromens des Mahlwerkes.

Bei diesem vorbekannten Stand der Technik erfolgt somit keine Füllstandserfassung des Kaffeebohnenbehälters. Allenfalls ist der Zeitpunkt detektierbar, wann der Kaffeebohnenbehälter leer ist. Problematisch bei diesem vorbekannten Stand der Technik ist jedoch, dass durch diese indirekte Überwachung des Kaffeebohnenbehälters auf das Vorhandensein einer ausreichenden Bohnenmenge erst dann geräteseitig eine Aktion ausgelöst wird, wenn der Kaffeebohnenbehälter bereits entleert ist. Dies führt zwangsläufig dazu, dass ein Kaffeebohnenmangel zu spät detektiert wird, nämlich erst dann, wenn durch ein Anforderungssignal die Bereitung eines Kaffeegetränkes bereits gewünscht wird und dieses nicht mit ausreichender Kaffeemehlmenge bereitet werden kann. Überdies stellt sich als nachteilig bei dem vorbekannten Stand der Technik dar, dass im Falle einer Detektion einer zu geringen Kaffeemehlmenge und anschließendem Nachfüllen des Kaffeebohnenbehälters ein neues Anforderungssignal generiert werden muss, wodurch das durch den vorherigen Anforderungsvorgang erstellte Kaffeemehl ungenutzt aus der Brühkammer entfernt wird.

Aus Dokument US-A-5 509 349 ist ein Kaffeeautomat bekannt, bei welchem photoelektrisch Wandlerelemente am Kaffeebohnenbehälter vorgesehen sind, um dem Füllstand des Behälters zu ermitteln.

Ausgehend von diesem diskutierten Stand der Technik liegt der Erfindung daher die Aufgabe zugrunde, einen Kaffeeautomaten der eingangs genannten Art dergestalt weiterzubilden, dass grundsätzlich das Mahlwerk zum Bereitstehen von frisch gemahlenem Kaffeepulver infolge eines Anforderungssignals nur dann angesteuert wird, wenn für das gewünschte Kaffeegetränk eine ausreichende Kaffeebohnenmenge im Kaffeebohnenbehälter vorhanden ist.

Diese Aufgabe wird erfindungsgemäß durch die Merkmale des unabhängigen Anspruchs 1 gelöst.

Dieser Kaffeeautomat verfügt im Gegensatz zum vorbekannten Stand der Technik über eine wirksame Füllstandserfassung hinsichtlich einer ausreichenden, in dem Kaffeebohnenbehälter befindlichen Kaffeebohnenmenge. Der Kaffeebohnenbehälter ist im Bereich seines Bodens lichtdurchlässig - transparent, durchsichtig oder verfügt über eine oder mehrere Öffnungen, durch die Licht, jedoch keine Kaffeebohnen austreten können.

Der im Rahmen dieser Ausführungen verwendete Begriff "Kaffeeautomat" umfasst Kaffeemaschinen aller Art, insbesondere die sogenannten Kaffeevollautomaten.

Ein photoelektrisches Wandlerelement, beispielsweise eine Photodiode oder ein Photowiderstand, sind mit ihrer photosensitiven Oberfläche zur Unterseite des lichtdurchlässigen Bereichs des Bodens des Kaffeebohnenbehälters weisend angeordnet. Aus Informationsredundanzgründen können auch mehrere derartige Wandlerelemente eingesetzt sein, die gruppiert oder auch in einer bestimmten Anordnungsverteilung vorgesehen sein können. In dem Kaffeebohnenbehälter befindliches oder darin eintretendes Licht belichtet das zumindest eine Wandlerelement, wenn der Kaffeebohnenfüllstand eine gewisse Höhe unterschritten hat. Ausgenutzt wird bei dieser Anordnung, dass zwischen den einzelnen Kaffeebohnen ein relativ großer Hohlraum verbleibt, durch den grundsätzlich Licht hindurch treten kann. Der die photosensitive Oberfläche des zumindest einen Wandlerelementes beaufschlagende Lichtstrom ist umso größer, je weniger Kaffeebohnenlagen sich auf dem Boden des Kaffeebohnenbehälters befinden, unter dem das Wandlerelement angeordnet ist. Bei diesem Kaffeeautomaten ist somit ein zu geringer Kaffeebohnenfüllstand in dem Kaffeebohnenbehälter detektierbar, bevor mit dem eigentlichen Mahlvorgang zum Bereiten eines Kaffeegetränkes begonnen wird.

Zweckmäßig ist die Anordnung des zumindest einen photosensitiven Wandlerelementes in einem nach unten offenen Ringspalt des Kaffeebohnenbehälters, wobei das Wandlerelement dem eigentlichen Kaffeeautomaten zugeordnet ist.

Bei einem solchen Kaffeeautomaten kann zudem vorgesehen sein, dass zur Erfassung des Füllstandes Licht im nicht sichtbaren Bereich, beispielsweise Infrarotlicht, eingesetzt wird. Dies kann beispielsweise durch Vorsehen einer entsprechenden Infrarotlichtquelle erfolgen, die beispielsweise auch in dem zuvor beschriebenen Ringspalt als Teil des Kaffeeautomaten nach oben zum Kaffeebohnenbehälter hin abstrahlend angeordnet sein kann. Eine solche Lösung hat zum Vorteil, dass dann der Kaffeebohnenbehälter lediglich im Bereich seines Bodens lichtdurchlässig ausgestaltet zu sein braucht. Die übrigen Bereiche des Kaffeebohnenbehälters könnten lichtundurchlässig sein. Es wären dann geschmackliche Veränderungen infolge von Lichteinwirkung auf die Kaffeebohnen weitgehend vermieden. Bei einer solchen oder auch bei einer anderen Ausgestaltung kann vorgesehen sein, dass die Belichtungsdaten des Wandlerelementes entsprechend einem vorgegebenen Takt oder entsprechend einem bestimmten Ereignis, etwa gekoppelt an das Vorliegen eines Anforderungssignals ausgelesen werden. Für den Fall des Vorsehens einer IR-Beleuchtung kann in einem solchen Fall die IR-Lichtquelle, beispielsweise ein oder mehrere IR-LED, nur für diesen Zeitraum bestromt werden.

Nachfolgend ist die Erfindung anhand eines Ausführungsbeispiels unter Bezugnahme auf die beigefügten Figuren beschrieben. Es zeigen:
- **Fig. 1:**: eine schematisierte Ansicht einer Kaffeemaschine mit einem Kaffeebohnenbehälter und
- **Fig. 2:**: einen vergrößerten Teilschnitt durch die Kaffeemaschine der Figur 1 im Bereich des unteren Abschlusses des Kaffeebohnenbehälters.

Ein Kaffeeautomat 1 ist als Vollautomat konzipiert und umfasst neben den beiden sichtbaren Kaffeeauslässen 2, 3 ein Dampfrohr 4, an dessen freiem Ende eine Dampfdüse 5 angeordnet ist. In das Gehäuse 6 des Kaffeeautomaten 1 ist eine Aufnahme 7 eingelassen, in der eine Bedienkonsole 8 eingesetzt ist. Die Bedienkonsole 8 umfasst als elektrische Schalter mehrere Taster T, mit denen die unterschiedlichen Funktionen des Kaffeeautomaten 1 ausgelöst werden können. Mehrere LED's L dienen als Kontrolleinzeigemittel zum Anzeigen, dass ein bestimmter Taster T betätigt worden ist, oder auch als Auswahlanzeiger, wenn mit einem Taster T unterschiedliche Funktionen ausübbar sind, sowie zum Darstellen von Fehlfunktionen. In dem Gehäuse 6 des Kaffeeautomaten 1 ist ein Mahlwerk zum Mahlen von Kaffeebohnen angeordnet. Zum Bevorraten von Kaffeebohnen ist dem Kaffeeautomaten 1 ein Kaffeebohnenbehälter 9 zugeordnet, der mittels eines Kupplungsringes mit dem Gehäuse 6 des Kaffeeautomaten 1 verbunden ist. Der Kaffeebohnenbehälter 9 ist aufgesetzt auf eine oberseitige Öffnung des Gehäuses 6, unterhalb der das Mahlwerk positioniert ist. Der Kaffeebohnenbehälter 9 des dargestellten Ausführungsbeispiels ist insgesamt lichtdurchscheinend ausgebildet.

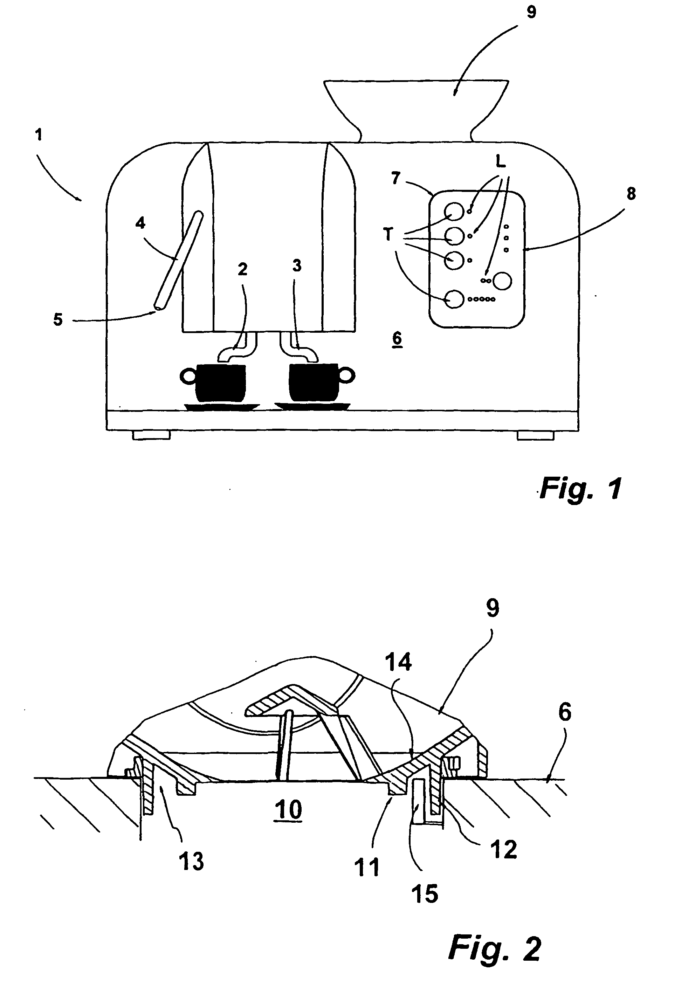

Figur 2 zeigt den unteren Bereich des Kaffeebohnenbehälters 9 mit seinem Ausgabeschacht 10 und den angrenzenden Bereichen des Gehäuses 6. Der Kaffeebohnenbehälter 9 trägt unterseitig einen inneren Ringkörper 11, durch den der Ausgabeschacht 10 eingeschlossen ist. Mit den Bezugszeichen 12 ist ein Kupplungsring gekennzeichnet, mit dem der Kaffeebohnenbehälter 9 mit dem Gehäuse 6 mittels einer Bajonettverriegelung verbunden ist. Durch den Ringkörper 11 und den Kupplungsring 12 ist ein umlaufender Ringspalt 13 eingeschlossen, der oberseitig durch den Boden 14 des Kaffeebohnenbehälters 9 begrenzt ist. In den Ringspalt 13 des Kaffeebohnenbehälters 9 ragt eine Photodiode 15 hinein, deren photosensitive Oberfläche zu dem lichtdurchlässigen Boden 14 des Kaffeebohnenbehälters 9 weisend angeordnet ist. Da der Ringspalt 13 konzentrisch zu dem Kupplungsring 12 verläuft, befindet sich die Photodiode 15 innerhalb dieses Ringspaltes 13 unabhängig von einer Drehstellung des Kaffeebohnenbehälters 9 gegenüber dem Gehäuse 6.

In den Kaffeebohnenbehälter 9 eintretendes Umgebungslicht belichtet die photosensitive Oberfläche der Photodiode 15 mit einem Lichtstrom, dessen Stärke abhängig davon ist, wieviele Kaffeebohnenlagen sich auf dem Boden 14 des Kaffeebohnenbehälters 9 befinden. Der die Photodiode 15 beaufschlagende Lichtstrom ist naturgemäß am größten, wenn der Kaffeebohnenbehälter 9 leer ist. Gleichwohl wird die Photodiode 15 auch dann belichtet, wenn mehrere Kaffeebohnenlagen noch auf dem Boden 14 des Kaffeebohnenbehälters 9 vorhanden sind, da durch die lose Packungsdichte der Kaffeebohnen ausreichend Licht durchtritt, um von der Photodiode 15 erfasst werden zu können.

In Abhängigkeit von dem Lichtstrom, der die Photodiode 15 belichtet, ist feststellbar, welchen Füllstand der Kaffeebohnenbehälter 9 mit Kaffeebohnen aufweist. Diese Füllstandserfassung bezieht sich auf die Erfassung eines Minimalfüllstandes, der vorhanden sein muss, damit das in dem Gehäuse 6 des Kaffeeautomaten 1 untergebrachte Mahlwerk bei einem Anforderungssignal in Betrieb gesetzt werden kann. Wird bei Vorliegen eines Anforderungssignals zum Bereitstellen eines Kaffeegetränkes eine Belichtung der Photodiode 15 mit einem zu starken Lichtstrom festgestellt, so ist dies ein Maß dafür, dass innerhalb des Kaffeebohnenbehälters 9 zu wenige Kaffeebohnen enthalten sind, damit das gewünschte Kaffeegetränk bestimmungsgemäß bereitet werden kann. In einem solchen Fall werden grundsätzlich der Mahlvorgang und der anschließende Brühvorgang nicht gestartet. Vielmehr wir ein akustisches und optisches Signal generiert, mit denen ein Benutzer auf den mangelnden Füllstand des Kaffeebohnenbehälters 9 hingewiesen wird. Zu diesem Zweck verfügt die Bedienkonsole 8 ebenfalls über zumindest eine LED L, die als optisches Signal in einem solchen Fall blinkt. Durch einen Summer, der ebenfalls Teil der Bedienkonsole 8 ist, wird gleichzeitig ein akustisches Signal generiert.

Aus der Beschreibung der Erfindung wird deutlich, dass es mit dem Gegenstand der Erfindung auf einfache Weise möglich ist, wirksam und insbesondere auch noch rechtzeitig auf einen zu geringen Füllstand an Kaffeebohnen innerhalb des Kaffeebohnenbehälters hinzuweisen.

### Bezugszeichenliste

- 1: Kaffeeautomat
- 2: Kaffeeauslass
- 3: Kaffeeauslass
- 4: Dampfrohr
- 5: Dampfdüse
- 6: Gehäuse
- 7: Aufnahme
- 8: Bedienkonsole
- 9: Kaffeebohnenbehälter
- 10: Ausgabeschacht
- 11: Ringkörper
- 12: Kupplungsring
- 13: Ringspalt
- 14: Boden
- 15: Photodiode

- L: LED
- T: Taster

## Patentansprüche (Patentansprüche für folgende(n) Vertragsstaat(en): AT, BE, BG, CH, CY, CZ, DK, EE, E, S, FI, FR, GB, GR, HU, IE, IT, LI, LU, NC, NL, PT, RO, SE, SI, SK, TR)

1. Kaffeeautomat mit einem mit seinem Ausgabeschacht (10) an den Eingang eines Mahlwerkes angeschlossenen Kaffeebohnenbehälter (9), **dadurch gekennzeichnet, dass** der Kaffeebohnenbehälter im Bereich seines den Ausgabeschacht (10) einschließenden Bodens (14) lichtdurchlässig ist und dass unterhalb dieses Bereiches des Bodens (14) des Kaffeebohnenbehälters (9) ein photoelektrisches Wandlerelement (15), mit seiner photosensitiven Oberfläche zur Unterseite des lichtdurchlässigen Bereichs des Bodens (14) des Kaffeebohnenbehälters (9) weisend, angeordnet ist.

2. Kaffeeautomat nach Anspruch 1, **dadurch gekennzeichnet, dass** der Kaffeebohnenbehälter (9) von dem Kaffeeautomaten (1) lösbar angeordnet ist und über einen Kupplungsring (12) verfügt, mit dem der Kaffeebohnenbehälter (9) mit dem Kaffeeautomaten (1) verbunden werden kann.

3. Kaffeeautomat nach Anspruch 2, **dadurch gekennzeichnet, dass** der Kafleebohnenbehälter (9) einen inneren, den Ausgabeschacht (10) einschließenden, von dem Boden (14) nach unten abragenden Ringkörper (11) aufweist und der Kupplungsring (12) konzentrisch und mit Abstand zu dem Ringkörper (11), mit dem Ringkörper (11) einen Ringspalt (13) ausbildend, angeordnet ist und dass das photosensitive Wandlerelement (15) als Teil des Kaffeeautomaten (1) in diesem Ringspalt (13) hineinragt.

4. Kaffeeautomat nach einem der Ansprüche 1 bis 3, **dadurch gekennzeichnet, dass** das photosensitive Wandlerelement eine Photodiode (15) ist.

5. Kaffeeautomat nach einem der Ansprüche 1 bis 4, **dadurch gekennzeichnet, dass** der gesamte Kaffeebohnenbehälter (9) lichtdurchlässig, insbesondere durchsichtig ist.

6. Kaffeeautomat nach einem der Ansprüche 1 bis 5, **dadurch ge** **kennzeichnet, dass** der Kaffeeautomat eine IR-Lichtquelle umfasst, die zum Beleuchten des Inneren des Kaffeebohnenbehälters angeordnet ist und die Photodiode zum Erfassen von IR-Licht ausgelegt ist.

7. Kaffeeautomat nach Anspruch 6 in seinem Rückbezug auf Anspruch 3, **dadurch gekennzeichnet, dass** die die IR-Lichtquelle in dem Ringspalt nach oben in Richtung zum Boden des Kaffeebohnenbehälters abstrahlend angeordnet ist.

8. Kaffeeautomat nach einem der Ansprüche 1 bis 7, **dadurch gekennzeichnet, dass** der Kaffeeautomat eine Steuerung umfasst, mit der entsprechend einem vorgegebenen Takt oder in Abhängigkeit von bestimmten Ereignisses, etwa dem Vorliegen eines Anforderungssignals die Belichtungsdaten des Wandlerlements ausgewertet werden.

## Patentansprüche (Patentansprüche für folgende(n) Vertragsstaat(en): DE)

1. Kaffeeautomat mit einem mit seinem Ausgabeschacht (10) an den Eingang eines Mahlwerkes angeschlossenen Kaffeebohnenbehälter (9), **dadurch gekennzeichnet, dass** der Kaffeebohnenbehälter im Bereich seines den Ausgabeschacht (10) einschließenden Bodens (14) lichtdurchlässig ist und dass unterhalb dieses Bereiches des Bodens (14) des Kaffeebohnenbehälters (9) ein photoelektrisches Wandlerelement (15), mit seiner photosensitiven Oberfläche zur Unterseite des lichtdurchlässigen Bereichs des Bodens (14) des Kaffeebohnenbehälters (9) weisend, angeordnet ist und dass der Kaffeeautomat (1) eine Steuerung umfasst, mit der entsprechend einem vorgegebenen Takt oder in Abhängigkeit von bestimmten Ereignisses, etwa dem Vorliegen eines Anforderungssignals die Belichtungsdaten des Wandlerelements ausgewertet werden.

2. Kaffeeautomat nach Anspruch 1, **dadurch gekennzeichnet, dass** der Kaffeebohnenbehälter (9) von dem Kaffeeautomaten (1) lösbar angeordnet ist und über einen Kupplungsring (12) verfügt, mit dem der Kaffeebohnenbehälter (9) mit dem Kaffeeautomaten (1) verbunden werden kann.

3. Kaffeeautomat nach Anspruch 2, **dadurch gekennzeichnet, dass** der Kaffeebohnenbehälter (9) einen inneren, den Ausgabeschacht (10) einschließenden, von dem Boden (14) nach unten abragenden Ringkörper (11) aufweist und der Kupplungsring (12) konzentrisch und mit Abstand zu dem Ringkörper (11), mit dem Ringkörper (11) einen Ringspalt (13) ausbildend, angeordnet ist und dass das photosensitive Wandlerelement (15) als Teil des Kaffeeautomaten (1) in diesem Ringspalt (13) hineinragt.

4. Kaffeeautomat nach einem der Ansprüche 1 bis 3, **dadurch gekennzeichnet, dass** das photosensitive Wandlerelement eine Photodiode (15) ist.

5. Kaffeeautomat nach einem der Ansprüche 1 bis 4, **dadurch gekennzeichnet, dass** der gesamte Kaffeebohnenbehälter (9) lichtdurchlässig, insbesondere durchsichtig ist.

6. Kaffeeautomat nach einem der Ansprüche 1 bis 5, **dadurch gekennzeichnet, dass** der Kaffeeautomat eine IR-Lichtquelle umfasst, die zum Beleuchten des Inneren des Kaffeebohnenbehälters angeordnet ist und die Photodiode zum Erfassen von IR-Licht ausgelegt ist.

7. Kaffeeautomat nach Anspruch 6 in seinem Rückbezug auf Anspruch 3, **dadurch gekennzeichnet, dass** die die IR-Lichtquelle in dem Ringspalt nach oben in Richtung zum Boden des Kaffeebohnenbehälters abstrahlend angeordnet ist.

## Claims (Claims for the following Contracting State(s): AT, BE, BG, CH, CY, CZ, DK, EE, E, S, FI, FR, GB, GR, HU, IE, IT, LI, LU, NC, NL, PT, RO, SE, SI, SK, TR)

1. Automatic coffee machine including a coffee bean holder (9), which is connected to the delivery shaft (10) at the inlet of a grinding means, **characterised in that** the coffee bean holder is translucent in the region of its bottom (14) which encircles the delivery shaft (10) and **in that** below this region of the bottom (14) of the coffee bean holder (9) is disposed a photo-electric transformer element (15), with its photosensitive surface facing towards the bottom surface of the translucent region of the bottom (14) of the coffee bean holder (9).

2. Automatic coffee machine according to claim 1, **characterised in that** the coffee bean holder (9) is disposed so as to be detachable from the automatic coffee machine (1) and has a coupling ring (12), with which the coffee bean holder (9) can be connected to the automatic coffee machine (1).

3. Automatic coffee machine according to claim 1, **characterised in that** the coffee bean holder (9) includes an inner annular body (11), which encircles the delivery shaft (10) and protrudes downwards from the bottom (14), and the coupling ring (12) is disposed concentrically relative to the annular body (11) and at a spacing from said annular body (11), forming an annular gap (13) with the annular body (11), and **in that** the photo-sensitive transformer element (15) extends into this annular gap (13) as part of the automatic coffee machine (1).

4. Automatic coffee machine according to one of claims 1 to 3, **characterised in that** the photosensitive transformer element is a photodiode (15).

5. Automatic coffee machine according to one of claims 1 to 4, **characterised in that** the entire coffee bean holder (9) is translucent, more especially transparent.

6. Automatic coffee machine according to one of claims 1 to 5, **characterised in that** the automatic coffee machine includes an infra red (IR) light source, which is disposed so as to illuminate the interior of the coffee bean holder, and the photodiode is designed to detect infra red light.

7. Automatic coffee machine according to claim 6 when dependent on claim 3, **characterised in that** the infra red light source is disposed in the annular gap radiating upwards in the direction of the bottom of the coffee bean holder.

8. Automatic coffee machine according to one of claims 1 to 7, **characterised in that** the automatic coffee machine includes a controlling means, with which the illumination data of the transformer element can be evaluated corresponding to a predetermined cycle or in dependence on certain events, for instance the presence of a request signal.

## Claims (Claims for the following Contracting State(s): DE)

1. Automatic coffee machine including a coffee bean holder (9) which is connected to its delivery shaft (10) at the inlet of a grinding means, **characterised in that** the coffee bean holder is translucent in the region of its bottom (14), which encircles the delivery shaft (10), and **in that** below this region of the bottom (14) of the coffee bean holder (9) is disposed a photo-electric transformer element (15), with its photosensitive surface facing towards the bottom surface of the translucent region of the bottom (14) of the coffee bean holder (9), and **in that** the automatic coffee machine (1) includes a controlling means, with which the illumination data of the transformer element can be evaluated corresponding to a predetermined cycle or in dependence on certain events, for instance the presence of a request signal.

2. Automatic coffee machine according to claim 1, **characterised in that** the coffee bean holder (9) is disposed so as to be detachable from the automatic coffee machine (1) and has a coupling ring (12), with which the coffee bean holder (9) can be connected to the automatic coffee machine (1).

3. Automatic coffee machine according to claim 2, **characterised in that** the coffee bean holder (9) indudes an inner annular body (11), which encircles the delivery shaft (10) and protrudes downwards from the bottom (14), and the coupling ring (12) is disposed concentrically relative to the annular body (11) and at a spacing from said annular body, forming an annular gap (13) with the annular body (11), and **in that** the photo-sensitive transformer element (15) extends into this annular gap (13) as part of the automatic coffee machine.

4. Automatic coffee machine according to one of the claims 1 to 3, **characterised in that** the photosensitive transformer element is a photodiode (15).

5. Automatic coffee machine according to one of the claims 1 to 4, **characterised in that** the entire coffee bean holder (9) is translucent, more especially transparent.

6. Automatic coffee machine according to one of the claims 1 to 5, **characterised in that** the automatic coffee machine includes an infra red (IR) light source, which is disposed to illuminate the interior of the coffee bean holder, and the photodiode is designed to detect infra red light.

7. Automatic coffee machine according to claim 6 when dependent on claim 3, **characterised in that** the infra red (IR) light source is disposed in the annular gap radiating upwards towards the bottom of the coffee bean holder.

## Revendications (Revendications pour l'(les) Etat(s) contractant(s) suivant(s): AT, BE, BG, CH, CY, CZ, DK, EE, E, S, FI, FR, GB, GR, HU, IE, IT, LI, LU, NC, NL, PT, RO, SE, SI, SK, TR)

1. Machine à café automatique avec un réservoir à café en grains (9) raccordé par son puits de distribution (10) à l'entrée d'un moulin à café **caractérisée en ce que** le réservoir à café en grains est translucide au niveau de son fond (14) englobant le puits de distribution (10) et **en ce qu'**il est placé sous cette zone du fond (14) du réservoir à café en grains (9) un élément convertisseur (15) photoélectrique dont la surface photosensible est orientée vers la face inférieure de la zone translucide du fond (14) du réservoir à café en grains (9).

2. Machine à café automatique selon la revendication 1 **caractérisée en ce que** le réservoir à café en grains (9) est amovible par rapport à la machine à café automatique (1) et dispose d'une bague de couplage (12) permettant de raccorder le réservoir à café en grains (9) avec la machine à café automatique (1).

3. Machine à café automatique selon la revendication 2 **caractérisée en ce que** le réservoir à café en grains (9) présente un corps annulaire (11) intérieur, englobant le puits de distribution (10), en saillie depuis le fond vers le bas et que la bague de couplage (12) est disposée concentriquement et à distance du corps annulaire (11), formant avec le corps annulaire (11) un intervalle annulaire (13) et **en ce que** l'élément convertisseur (15) photosensible s'engage, en tant que partie constituante de la machine à café automatique (1), dans cet intervalle annulaire (13).

4. Machine à café automatique selon l'une des revendications 1 à 3 **caractérisée en ce que** l'élément convertisseur photosensible est une photodiode (15).

5. Machine à café automatique selon l'une des revendications 1 à 4 **caractérisée en ce que** la totalité du réservoir à café en grains (9) est translucide et plus particulièrement transparent.

6. Machine à café automatique selon l'une des revendications 1 à 5 **caractérisée en ce que** la machine à café automatique comprend une source lumineuse IR qui est disposée pour éclairer l'intérieur du réservoir à café en grains et que la photodiode est conçue pour détecter la lumière IR.

7. Machine à café automatique selon la revendication 6, dans sa référence à la revendication 3, **caractérisée en ce que** la source de lumière IR est disposée dans l'intervalle annulaire en rayonnant vers le haut, vers le fond du réservoir à café en grains.

8. Machine à café automatique selon l'une des revendications 1 à 7 **caractérisée en ce que** la machine à café automatique comprend un système de commande permettant d'évaluer selon une cadence préalablement définie ou en fonction de certains événements, par exemple la présence d'un signal de demande, les données d'éclairage de l'élément convertisseur.

## Revendications (Revendications pour l'(les) Etat(s) contractant(s) suivant(s): DE)

1. Machine à café automatique avec un réservoir à café en grains (9) raccordé par son puits de distribution (10) à l'entrée d'un moulin à café **caractérisée en ce que** le réservoir à café en grains est translucide au niveau de son fond (14) englobant le puits de distribution (10) et **en ce qu'**il est placé sous cette zone du fond (14) du réservoir à café en grains (9) un élément convertisseur (15) photoélectrique dont la surface photosensible est orientée vers la face inférieure de la zone translucide du fond (14) du réservoir à café en grains (9) et **en ce que** la machine à café automatique (1) comprend un système de commande permettant d'évaluer selon une cadence préalablement définie ou en fonction de certains événements, par exemple la présence d'un signal de demande, les données d'éclairage de l'élément convertisseur.

2. Machine à café automatique selon la revendication 1 **caractérisée en ce que** le réservoir à café en grains (9) est amovible par rapport à la machine à café automatique (1) et dispose d'une bague de couplage (12) permettant de raccorder le réservoir à café en grains (9) avec la machine à café automatique (1).

3. Machine à café automatique selon la revendication 2 **caractérisée en ce que** le réservoir à café en grains (9) présente un corps annulaire (11) intérieur, englobant le puits de distribution (10), en saillie depuis le fond vers le bas et que la bague de couplage (12) est disposée concentriquement et à distance du corps annulaire (11), formant avec le corps annulaire (11) un intervalle annulaire (13) et **en ce que** l'élément convertisseur (15) photosensible s'engage, en tant que partie constituante de la machine à café automatique (1), dans cet intervalle annulaire (13).

4. Machine à café automatique selon l'une des revendications 1 à 3 **caractérisée en ce que** l'élément convertisseur photosensible est une photodiode (15).

5. Machine à café automatique selon l'une des revendications 1 à 4 **caractérisée en ce que** la totalité du réservoir à café en grains (9) est translucide et plus particulièrement transparent.

6. Machine à café automatique selon l'une des revendications 1 à 5 **caractérisée en ce que** la machine à café automatique comprend une source lumineuse IR qui est disposée pour éclairer l'intérieur du réservoir à café en grains et que la photodiode est conçue pour détecter la lumière IR.

7. Machine à café automatique selon la revendication 6, dans sa référence à la revendication 3, **caractérisée en ce que** la source de lumière IR est disposée dans l'intervalle annulaire en rayonnant vers le haut, vers le fond du réservoir à café en grains.
